# EUROPEAN PATENT APPLICATION

(11) **EP 2 889 770 A1**
(43) Date of publication of application: **01.07.2015**
(21) Application number: 14382575.0
(22) Date of filing: 29.12.2014
(51) Int. Cl.: G06F 9/52, G06F 9/54, H04W 52/02

(54) **Improved applications execution between electronic devices and cloud**

(30) Priority: 27.12.2013 EP 13382560
(71) Applicant: Telefonica Digital España, S.L.U., 28013 Madrid (ES)
(72) Inventor: Grunenberger, YAN, 08019 Barcelona (ES)
(74) Representative: Carpintero Lopez, Francisco

(57) **Abstract**

A method, system and devices for extending battery life and capability of a user mobile device capable of running applications. It allows the isolation of network and application background activity in the cloud, while maintaining interactivity for the final user.

## Description

### Technical field

The present invention relates to the efficient execution of applications between a mobile device and an interconnection of networked system as defined nowadays as cloud. More specifically, it discloses a method for "cloudification" of devices (e.g. mobile phones) for battery life optimization. Especially for HTML5-based devices.

### Background of the invention

As global computer networks, such as the Internet, continue to grow globally at a rapid pace and as mobile devices have everyday more functionalities and offer more complex services, an increasing number of people and businesses from around the world are using mobile devices and accessing these networks for both business and personal activities.

Applications running on mobile devices are getting more and more connected in order to delivery high-value services. In order to do so, most of the times, the mobile devices terminals have to access a cloud infrastructure to be able to deliver such high-value services. Cloud computing or cloud infrastructure is the use of computing resources (hardware and software) that are delivered as a service over a network (typically the Internet). In other words, it refers to services offered over a communication network, from interconnected data centers all over the world, which collectively are referred to as the "cloud." The idea of the "cloud" simplifies the many network connections and computer systems involved in online services. Any user subscribed to the services with an Internet connection can access the cloud and the services it provides. Since these services are often connected, users can share information between multiple systems and with other users.

So mobile devices today do not only maintain continuous connectivity to the cellular network, but also to a number of Internet services that target real time connectivity for messaging or calls. Such connectivity is implemented through a number of mechanisms aiming to enable the user's "online presence". A handful of apps that maintain connectivity (such as WhatsApp, Skype, Facebook...) but send no useful information for the user can increase the mobile's power drain by a factor of 9 (according to our own measurements) and can impact the network capacity by adding frequent network signaling events. With the ever increasing number of OTT (over the top) players this situation will continue degrade in the future and will affect the battery life of final customers as well as radio access capacity of service providers. In the present invention, it is argued that such a problem can be solved by isolating the network and application background activity in the cloud, while maintaining interactivity for the final user.

Online presence today is implemented in a number of ways that vary across platform and applications.
Android: Applications can run in the background, either as full-featured applications or lighter background services. These apps or services can use any possible network setup; there are no limitations, except that the OS might terminate the app in case of memory overuse. Android does provide a cloud to device (known as c2dm, but now called Google Cloud Messaging - gcm) push mechanism that can be used by any app if required, enabling to push up to 4Kb of data under a key/value dictionary format. There is no guarantee on the actual delivery or the order of delivery.
iOS: Applications are not enabled to run in the background by default. Developers must put special profiles in order to support this. Apple recommends develop- ers to use the native iOS push API to enable sending messages to the applications (limited to 256 Bytes, with the same restrictions as Google on delivery quality). Applications can however, run their own connec- tivity logic on the device if: 1) they are registered as long-running background task applications (e.g. audio streaming, VoIP or apps connecting to peripherals), 2) if they need to perform a single finite-length task, and 3) if they need to use notifications to alert the user to some important messages (e.g. alarm). Among our considered apps, Skype falls in the first category, while the rest implement their own logic, until the OS kills them, when they start relying solely on the native Apple push mechanism.
Mobile web applications: Online presence is limited to the constrained APIs offered by the web browsers. Facebook mobile website is a good example. Ajax polling techniques, long lived HTTP connections, or using standardized modern API such as websockets are some of the different ways available to maintain connectivity between the device and the Internet. Web apps can stay connected on Android phones when the browser is in background; whereas on iOS, websocket-based websites can maintain connectivity when the browser is sent to the background for a short grace period.
All the mechanisms presented before are provided a single-way (from cloud to device) to send messages; however, online presence applications require a double-way communication to insure feedback to the cloud-based providers. Therefore, we detail here the contributions in the research community that try to overcome this problem.
Offloading computation has been proposed as a means to decrease energy consumption on mobile devices, as well as to enable more resource hungry applications to be developed for resource starved mobile devices.
For example, some prior art proposed solutions study the cellular network performance or discuss how one can optimize the RNC state machine or discuss the effect of tail-energy and how fast-dormancy (a standard implemented by the GSM-Alliance) can be beneficial or try to predict traffic requests with the intention to save on tail-energy.
Finally, optimizing content delivery over HTTP has a rich history (and partially, we build upon some of the insights gained). For example, it is proposed a system where a proxy caches a "base object" and for any subsequent request for the same object, the proxy fetches the object, computes the difference, and sends only the difference to the client. This also reduces redundant transmissions. Recent technologies like the Silk browser from Amazon and Opera browser optimize website content by utilizing the cloud to adapt the content.
However the motivation of many of these solutions to use the cloud is only to create a platform for apps to be deployed and changed easily, very different to the purpose of the present invention.
The patent application US20120072481 A1 proposes a generic solution (not specific to any operating system) where two environments are considered for processing instructions from applications: one mobile and one in the cloud, and propose a series of claim to address the communication and the location of the execution of these instructions.

All push platforms proposed by Apple or Google does not offer two features which are required for maintaining online presence, said features are:
- Reliability (i.e. there is no guarantee that the notification is delivered)
- Full duplex - the phone cannot send any information using an optimized channel in the phone itself.

In patent application US20120072481 A1, regarding offloading computation and communication, its approach is to work on the instruction level, where every set of unique instruction is evaluated either in the cloud or the device depending on the characteristic of the instruction by a processor (namely a silicon chip that handle instruction, such as addition, deletion etc...). The present invention approach is different as it does not work at the instruction level but at the abstraction level close to the user, i.e. the graphical interface. HTML5 technologies are mature enough to be a valid replacement for mobile devices (as the Openwebdevice / FirefoxOS is demonstrating this today). In these devices, the entire user interface is build around HTML5 technologies, which encompasses HTML (visual elements placement) and Javascript (application logic). Both HTML and Javascript are translated in the end by the final devices into instructions; we propose not to go down to this level, but on the contrary stay at this level of abstraction where the user interest is located. The present invention scheme uses a synchronization of the machine representation of the HTML in its memory, namely called DOM (document object model), as well as its JavaScript state (Objects) in the JavaScript processing engine. So instructions are not offloaded but rather the state of DOM and JavaScript is synchronized, the closest machine representation of what the user is seeing and interacting with its mobile device.

Regarding tail-energy management (via mechanism such as Fast Dormancy) the motivation is similar, although the present invention approach is different as it wants to eliminate background connections all together by outsourcing them to the cloud, thus saving on network state and energy.
Regarding HTTP traffic optimization, the present invention scheme uses specifically the DOM tree, which is different from traditional proxy-based optimization. The proposed operation is patently different - as it does not deal with CSS/JS optimization but rather focus on how content in applications is delivered when needed, which is complementary. So the present invention technology is built on strengths of HTML5 technologies.

The embodiments of the invention proposed below will overcome at least some of the prior art drawbacks and will achieve the above mentioned technical advantages.

### SUMMARY

The problems found in prior art techniques are generally solved or circumvented, and technical advantages are generally achieved by the disclosed embodiments which provide a method, system and device for application execution between a cloud infrastructure and a mobile device (in order to optimize the application execution and to optimize the battery life and capabilities of the device).

In a first aspect a method is provided for extending battery life and capability of a physical mobile device (being used by a user) capable of running applications (or webapps), said method comprising the steps of:
- Capturing and freezing the state of applications running on said mobile device when put in background,
- Synchronizing the state associated with each application on said mobile device with a cloud processing engine
- Running each of said synchronized applications on said cloud processing engine so as to process background messages from third parties,
- Detecting user-visible changes corresponding to said applications run in said cloud engine and trigger synchronization, and
- Synchronizing back said user-visible changes from said cloud processing engine onto said mobile device.

In an embodiment said mobile device is capable of running HTML 5 applications (an HTML5 based mobile device).

Said states may be DOM and/or Javascript Objects states. In an embodiment, the step of capturing and freezing the state of the applications running on said mobile device when put in background, is based on DOM and/or Javascript Objects states. In an embodiment, the step of synchronizing back said user-visible changes is based on DOM and Java Script states.
Said cloud processing engine may be a headless engine. More specifically, it may be a headless HTML5 engine.
Said synchronizing back step may be performed on demand or if the mobile device is put back out of the idle mode.
The applications may be HTML 5 applications. At least one of the applications may be a web application. The applications may be online-presence based applications. The mobile device may be one of the following: a mobile telephone, a smart phone, an electronic notepad, a personal digital assistant (PDA), a tablet, a laptop or a personal computer.

In an embodiment, the mobile device is connected, through a communications link, with a communications network using cloud computing and the cloud processing engine is located in a network node. In an embodiment, for each application, the application elements may be separated in functional application blocks and at least one of said application blocks is executed by network nodes and the rest of application blocks are executed by the mobile device.
Said application elements may be at least one of the following: functions, objects and variables used by the application when being executed.
In an embodiment, a set of rules defining the interactions between the functional application blocks is obtained.

In an embodiment, it is proposed a method for extending battery life and capability of a HTML5 based mobile device capable of running HTML5 applications (or webapps), the method comprising the following steps:
- Capturing and freezing the state of at least one HTML5 application running on said mobile device when put in background based on DOM and Javascript Objects states;
- Synchronizing the DOM and JavaScript state associated with each application on said mobile device with a headless HTML5-based processing engine that runs the entire mobile device environment
- Run the synchronized application on the cloud headless HTML5 engine to process background messages from third parties.
- Detecting user-visible changes corresponding to said application run in the headless engine and trigger synchronization.
- Synchronizing back the DOM and JavaScripts from the headless to physical mobile device on demand in case of new user messages/notifications, or proactively if physical device is put back out of idle mode.

In a second aspect a system is provided for extending battery life and capability of user mobile devices capable of running applications, said system comprising:

A user mobile device comprising a processor configured to capture and freeze the state of the applications running on said mobile device when put in background and to synchronize the state associated with each application on said user physical mobile device with a cloud processing engine that runs the mobile device environment
A cloud processing engine configured to run each of said synchronized applications so as to process background messages from third parties, to detect user-visible changes corresponding to said applications run in said cloud engine and to trigger synchronization and to synchronize back said user-visible changes from said cloud processing engine onto said mobile device.

In a third aspect a user mobile device is provided for extending battery life and capability of the mobile device, the mobile device being capable of running applications, said mobile device comprising:
A processor configured to capture and freeze the state of the applications running on said mobile device when put in background, to synchronize the state associated with each application on said user physical mobile device with a cloud processing engine and to allow synchronize back user-visible changes from said cloud processing engine onto said mobile device.

In a fourth aspect a cloud processing engine is provided for extending battery life and capability of a user mobile device capable of running applications, said cloud processing engine being configured to:
- Synchronize the state associated with each application on said mobile device (e.g. whose state have been captured and frozen by the mobile device when put in the background) with the cloud processing engine
- Run each of said synchronized applications so as to process background messages from third parties,
- Detect user-visible changes corresponding to said applications run in said cloud engine and trigger synchronization
- Synchronize back said user-visible changes from said cloud processing engine onto said mobile device.

Finally, a computer program comprising computer program code means adapted to perform the above-described methods is presented and a digital data storage medium is also provided encoding a machine-executable program of instructions to perform any of the methods disclosed.

Consequently, according to the invention, a method, system, device and computer program according to the independent claims are provided. Favorable embodiments are defined in the dependent claims.

These and other aspects of the invention will be apparent from and elucidated with reference to the embodiments described hereinafter.

The present invention approach implies, among others, the following advantages:
- Elimination of hidden energy and network cost related to maintenance of online presence in Over The Top applications; when not used a device is virtually consuming no energy (9X improvement ratio).
- Optimization of connectivity management by having a single, controlled, connection from the physical device to the headless engine living in the cloud;
- Headless engine enables fast replacement of the physical device in case of loss or degradation; content can be backed up with unlimited resources in the cloud.
- This is not only virtualization (or emulation) but also optimized execution as the cloud engine is running the entire phone (not application-centric) and is compiled against traditional architecture (x86) and not mobile (ARM).
- Strange or bad behaving code can be isolated in the cloud without harming the network or the physical device.

### BRIEF DESCRIPTION OF THE DRAWINGS

Some embodiments of the method and device are now described, by way of example only, and with reference to the accompanying drawings, in which:
Figure 1 presents a block diagram schematically showing an offloading communication via cloning according to an embodiment of the invention.
Figure 2 shows a block diagram of the typical structure of HTML 5 based OS (firefox OS).
Figure 3 presents a block diagram schematically showing the changes in the current HTML5-OS according to an embodiment of the invention.
Figure 4 shows a block diagram of the general "cloudification" scheme for a HTML5-based phone according to an embodiment of the invention.
Figure 5 shows an example of a typical messaging application.
Figure 6 shows the UI transition for the specific example of figure 5.
Figure 7 shows a schematic block diagram schematically showing the mutations in the DOM tree for the example.

### DETAILED TECHNICAL DESCRIPTION

The present embodiments may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

In the present text, the terms "handset", "electronic device", "physical device", "physical mobile device", "phone", "mobile phone", "electronic device", "mobile device", "mobile terminal" or "user equipment" are going to be used indistinctly to refer to the same concept, the communications terminal used by an end user (i.e. a subscriber) of a communications network to communicate over it. This terminal or user equipment may include any device capable of transmitting and receiving data (e.g., voice, text, images, and/or multimedia data) over the communications network. For example, it may refer to a mobile telephone, a smart phone, an electronic notepad, a personal digital assistant (PDA), a tablet, a laptop, a personal computer...

The following design considerations are taken into account for an optimized way to run online-presence based app on a mobile device:
- (1) Maintaining connectivity between the client and the service needs to be done via a mechanism that is transparent to the applications, and enables bidirectional communication.
- (2) Maintenance of the connection between the device and the service needs to be done periodically, and with short messages that do not trigger a promotion to DCH at the 3G level.
- (3) Maintaining connectivity in FACH is network friendly in that it may be accompanied by no signaling traffic. For basic keep-alive connectivity, exchanged traffic should be kept to the minimum.
- (4) If online presence requires the exchange of information beyond keep-alive, then the mechanism should aim to maximize the amount of data transferred per DCH promotion.

These considerations clearly point towards the maintenance of a long-lived connection between the handset and the service. However, the experiments made so far, reflect results when the user does not even interact with the device. All the cost comes out from the pure maintenance of the background service. Therefore, one could argue that the one decision that would rebalance the energy expenditure with the resulting user experience would be to completely offload online presence. To abide to first design considerations, we argue towards cloning the entire phone functionality in the cloud. According to the second design consideration, provision a single connection between the headless engine and the device to maintain connectedness is provisioned.

To optimally use the connection between the handset and its headless engine in the cloud, we aim to transfer only the changes that affect the user experience. As such, we may end up using FACH for service maintenance, and DCH only when the changes justify the associated cost. Note that the frequency of keep-alive messages will have to be network specific.

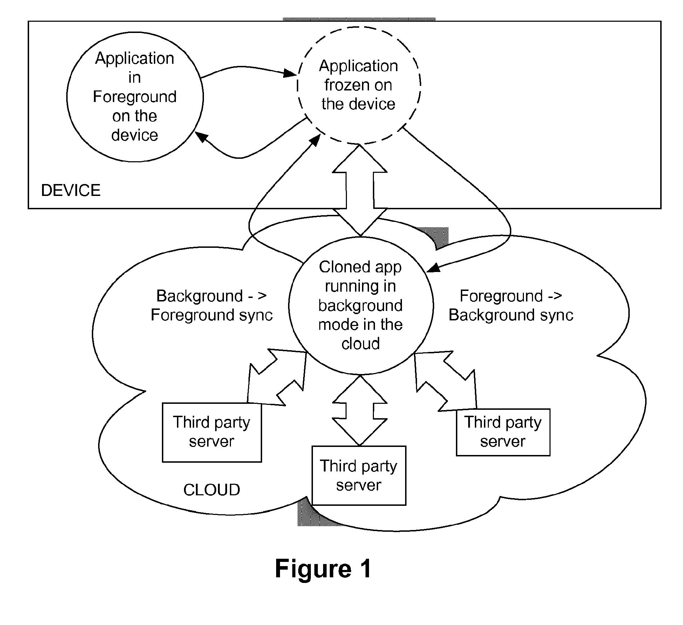

In figure 1, it is shown a high level description of the proposed cloud based solution. When an online-presence application is put in the background, the last state of the application interface is pushed to the cloud, where a headless version of the phone running the app is permanently running. The application on the mobile is dormant while the headless is actively running and interacting with the support services in the cloud (keep alive, etc..). When the engine application user interface is modified at the visual level (arrival of a new message, new notification), the new content is pushed through the optimized communication channel - if and only if the interface has been impacted. As soon as the new state of the application interface is pushed on the final device, the application can be operated locally from the mobile device to keep it responsive.
The main requirement for such architecture is that all user content changes on the device or on the headless engine must be accounted, relayed and reconciled efficiently. This is important to preserve transparency and user experience. For that to be possible, however, apps need to be developed using public APIs and exposed to the developers in an identical way.
Therefore, a split model of the application between the cloud and the device is targeted, using for example HTML technologies as a way to do this and relying on the DOM (Document object Model) and JavaScript objects monitoring in order to accomplish this.

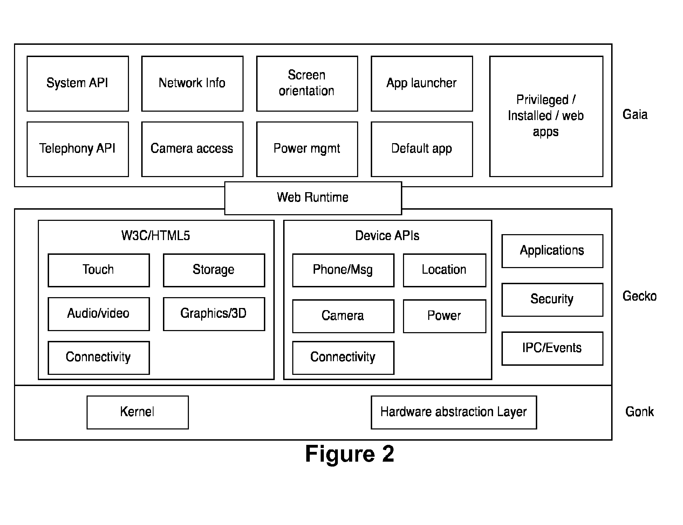

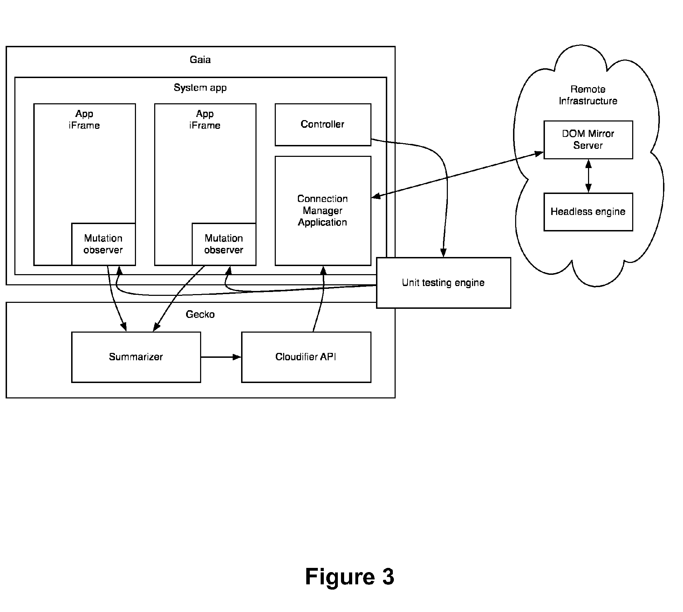

The OS (Operating System) has a microkernel-like architecture. The high level structure of FirefoxOS, a good HTML5-based device is depicted in Fig. 2, with three main components with very clearly defined roles:
Gaia is the user interface of the Firefox OS platform, implemented in HTML5. It manages all applications, implements the smartphone functionalities and allows for third-party apps to be installed. It interfaces with the underlying operating system using open Web APIs exposed by Gecko.
Gecko is the layout engine that provides all of the support for HTML, CSS, and JavaScript in which the applications are written. It bridges applications to the low level system through the device APIs to applications running in Gaia and controls access to them. Gecko also man- ages application isolation, each of which are run in an isolated "content" process, and manages all events sent from the system to applications.
Gonk is the lower level operating system of the plat- form. Essentially it is a very simple Linux distribution, similar to the Linux distribution powering Android de- vices, and acts as a porting target for Gecko.
The core functionality of web engine is the processing of a HTML document, where content is interpreted as objects and interactions performed through the Document Object Model (DOM). DOM is the representation of each document's contents that can be manipulated dynamically by a script, most often JavaScript. It defines the objects and properties of HTML elements, and the methods to access them and presents the document as a tree-structure. Script code can only interact with the tree via the DOM bindings component that acts as a reference monitor. All web-browser engines use the same approach.
Mutation Observers (MO) have been designed as an efficient way to monitor any modifications to the DOM , including addition or removal of elements, their attributes or content changes. When a change or a set of changes happens to a specific element that a Mutation Observer has under observation, the observer's callback function is invoked with a description of the mutations. It is often presented as a convenient use case for writing browser extensions but in our case can be used to 1) detect UI changes due to some event inside one application; 2) mirror an application between a mobile client and its headless engine by tracking their relative changes. Mutation observers are used as a way to track changes occurring at the DOM, indicating a change at the UI level of the apps written in HTML5. Objects evolution is tracked in the JavaScript environment as well.
In order to monitor changes within applications transparently, changes in how the different components of the system interact are introduced. Fig. 3 illustrates the new control flow. The application manager (controller) is slightly altered in order to enable to the invention to monitor all applications. A script (MO) that monitors and changes the DOM tree without modifying application logic is injected into each application upon its launch.
A "Cloudifier API" is introduced to control the flow of summaries of changes and gather summaries from multiple applications in the headless engine over a single websocket connection with the device. Feedback from both the physical device and the headless engine is used to identify possible presence of middle boxes (TCP disconnections), and send as few as possible keep lives (keep alive) as possible to mitigate them in an efficient way. These "keep alive" are maintained at the pure TCP level to trigger only FACH connections. When an interactive event happens, as much as possible data is packed to maximize the use of DCH state.
When the device is connected to its headless engine, there are no consistency issues - DOM and JavaScript changes are synchronized at the beginning and end of each interactive session and the inactive copy of the application is paused using system-provided APIs. The application does not resume on the physical device or the cloud until the synchronization finishes, therefore avoiding changes that happen during migration. Although applications lose connectivity to their Internet services when suspended, it is assumed that they have mechanisms to recover from connection failures, normally encountered during device mobility.

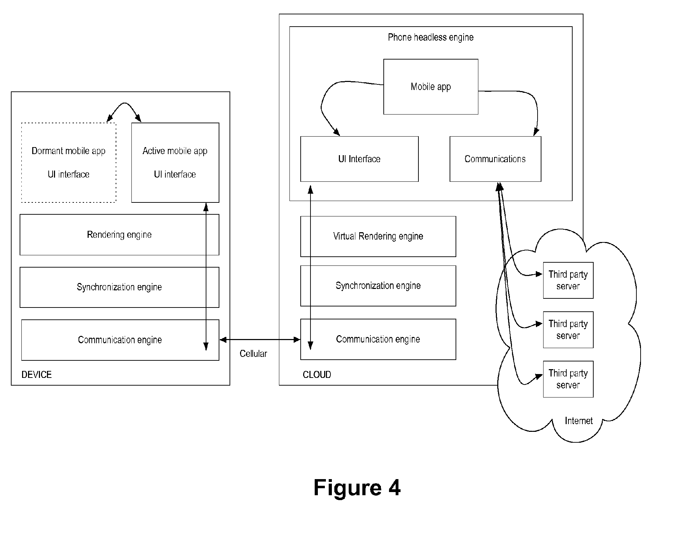

The invention may use HTML5 as a platform to enable implementation of the technology, however virtually any operating system that exposes its rendering API can be altered to 1) track visual change of apps 2) propagate these change to the physical device in an optimized manner.
The following generalization on figure 4 is proposed.
In the cloud (right part of the figure), a mobile app execution environment splits the execution of the app into two parts: a UI-interface part, where all the interactions with user are isolated; and a communication part with all the internal communication logic (i.e. maintaining online presence). This enables transparent optimization and offloading of the communications for the third party app developer. When the communication code impacts the UI interface, changes are detected by the virtual rendering engine and are synchronized with the physical device (at the left side of the figure) using a cellular link, through a generic communication engine that takes care of connection/disconnection and keeps the cloud aware of physical device status (switched on/off).
When application is in use by the user, the application on the physical device is synchronized in real time with the cloud counterpart; when the application is put in background, the UI is put as dormant and the communication engine is waiting for notification from the cloud counterpart.
Android, being open source, could be used to implement a similar concept. However, it is envisioned that the rendering would be very different from one application to another, as they are multiple methods to render the graphical interface on this system.
A VNC like approach (remote desktop) could be considered as similar, however DOM synchronization is a more lightweight scheme that does not harm the network and that is resolution independent. Also, the rendering is performed locally, which enable to keep good reactivity in terms of graphical interface. Remote desktop technologies are impacted by latency, which can be important over cellular network. Such advantages are described by observing the behavior of a web application on the following figures.

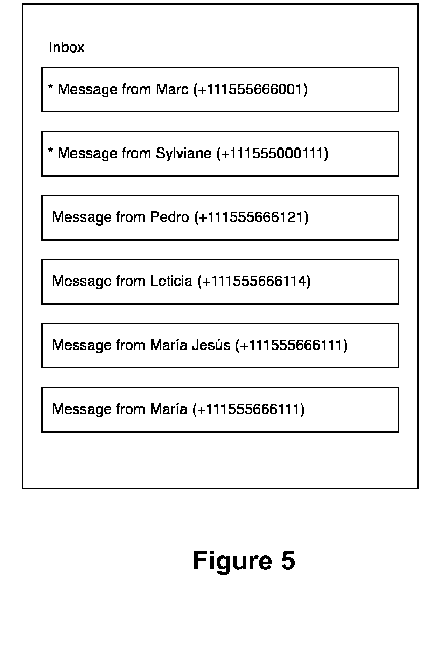

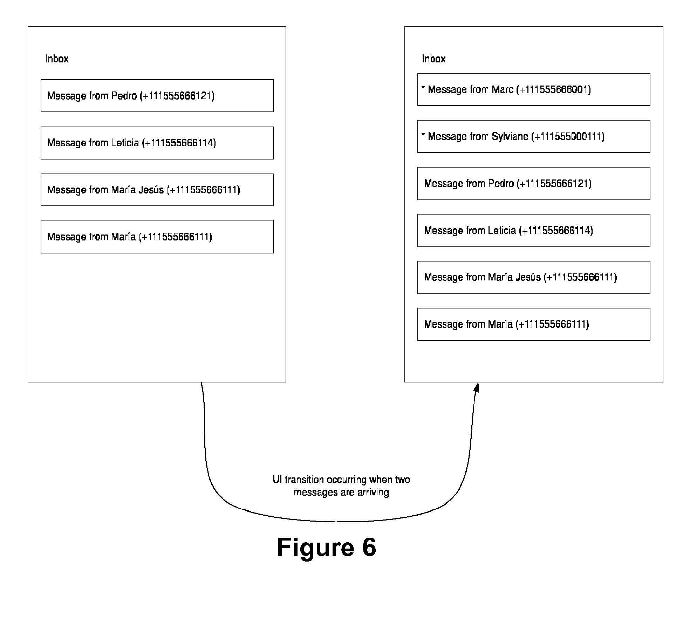

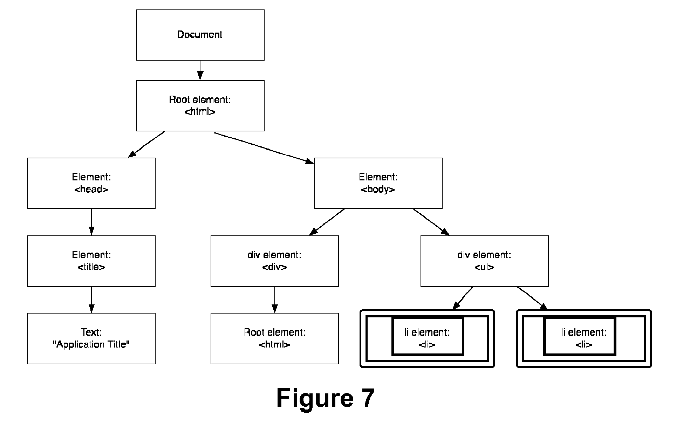

An example of a text-based application (e.g. a messaging application) is presented in figure 5. In this example, new incoming messages (from users "Marc" and "Sylviane") are presented on the top two lines (the rest of messages, from Pedro, Leticia, María Jesus and María, are old messages previously arrived and presented to the user). From the user point of view, the UI (user interface) transition illustrated on Figure 6, is happening.
As expected, the UI is changed quite significantly by the arrival of the two messages. Using a traditional streaming approach, the cloud headless engine has to propagate all the screen change, which means transferring a huge part of the current screen as this one has been globally impacted. This approach has a huge cost depending on the resolution of the screen (which tend to go Hi DPI - or "retina" - i.e. the pixel is invisible to the human eye). Also, the latency perceived by the user is impacted by the latency of the network link, as the data is displayed according to the data reception.
On the other hand, in the DOM approach as presented earlier, the visual changes are corresponding to the following mutations in the DOM tree. On figure 7, an extract of the tree is presented.
On Figure 7, the partial DOM tree of the chat application is presented. Two elements of the list (the two incoming messages) are impacting the DOM tree: the li element, corresponding to the first two items of the list (highlighted on figure 7). Only these elements need to be propagated to impact the tree. The headless engine needs only to transfer this information to the physical client, and the latter will render the change locally, independently of the resolution of the terminal.

A person skilled in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.
The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.
It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for extending battery life and capability of a user mobile device capable of running applications, said method comprising the steps of:
- Capturing and freezing the state of applications running on said mobile device when put in background,
- Synchronizing the state associated with each application on said user mobile device with a cloud processing engine
- Running each of said synchronized applications on said cloud processing engine so as to process background messages from third parties,
- Detecting user-visible changes corresponding to said applications run in said cloud engine and trigger synchronization, and
- Synchronizing back said user-visible changes from said cloud processing engine onto said user mobile device.

2. The method according to any of the previous claims where said mobile device is an HTML 5- based mobile device.

3. The method according to any of the previous claims where said states are DOM and/or Javascript Objects states.

4. The method according to any of the previous claims where the step of capturing and freezing the state of the applications running on said user mobile device when put in background, is based on DOM and/or Javascript Objects states.

5. The method according to any of the previous claims where the step of synchronizing back said user-visible changes is based on DOM and Java Script states.

6. The method according to any of the previous claims where said cloud processing engine is a headless HTML5 engine.

7. The method according to any of the previous claims where said applications are HTML5 applications.

8. The method according to any of the previous claims where at least one of the applications is a web application.

9. The method according to any of the previous claims where the user mobile device is one of the following: a mobile telephone, a smart phone, an electronic notepad, a personal digital assistant, PDA, a tablet, a laptop or a personal computer.

10. The method according to any of the previous claims where the mobile device is connected, through a communications link, with a communications network using cloud computing and the cloud processing engine is located in a network node.

11. The method according to claim 10 where, for each application, the application elements are separated in functional application blocks and at least one of said application blocks is executed by network nodes and the rest of application blocks are executed by the mobile device

12. A system for extending battery life and capability of a user mobile device capable of running applications, said system comprising:
A user mobile device comprising a processor configured to capture and freeze the state of applications running on said mobile device when put in background and to synchronize the state associated with each application on said user physical mobile device with a cloud processing engine The cloud processing engine configured to run each of said synchronized applications so as to process background messages from third parties, to detect user-visible changes corresponding to said applications run in said cloud engine and to trigger synchronization and to synchronize back said user-visible changes from said cloud processing engine onto said mobile device.

13. A user mobile device for extending battery life and capability of the mobile device, the mobile device being capable of running applications, said mobile device comprising:
A processor configured to capture and freeze the state of applications running on said mobile device when put in background, to synchronize the state associated with each application on said user physical mobile device with a cloud processing engine and to synchronize back user-visible changes from said cloud processing engine onto said mobile device.

14. A cloud processing engine for extending battery life and capability of a user mobile device capable of running applications, said cloud processing engine being configured to:
- Synchronize the state associated with each application on said mobile device with the cloud processing engine
- Run each of said synchronized applications so as to process background messages from third parties,
- Detect user-visible changes corresponding to said applications run in said cloud engine and trigger synchronization
- Synchronize back said user-visible changes from said cloud processing engine onto said mobile device.

15. A computer program product comprising computer-executable instructions for performing the method according to any of the claims 1-11, when the program is run on a computer.
